## Europäisches Patentamt
## European Patent Office
## Office européen des brevets

(19)

(11) Publication number: **0 035 516**
**B1**

(12)

# EUROPEAN PATENT SPECIFICATION

(45) Date of publication of patent specification: **26.01.83**

(21) Application number: **80901670.2**

(22) Date of filing: **01.09.80**

(86) International application number:
**PCT/SE80/00219**

(87) International publication number:
**WO 81/00793 19.03.81 Gazette 81/7**

(51) Int. Cl.³: **H 02 G 3/04,** E 04 C 1/39,
E 04 C 2/52, F 16 B 5/06,
F 16 B 12/26, A 47 B 57/00

(54) **WALL FOR PARTITIONING INTO SECTIONS A CHANNEL FOR ELECTRICAL CABLES.**

(30) Priority: **07.09.79 SE 7907449**

(43) Date of publication of application:
**16.09.81 Bulletin 81/37**

(45) Publication of the grant of the patent:
**26.01.83 Bulletin 83/4**

(84) Designated Contracting States:
**AT CH DE FR GB LI NL**

(56) References cited:
**DE - A - 2 145 613**
**SE - C - 205 301**

(73) Proprietor: **TELEFONAKTIEBOLAGET L M ERICSSON**
**S-126 25 STOCKHOLM (SE)**

(72) Inventor: **LEGERIUS, Bengt Efraim**
**Hagvägen 6**
**S-611 00 Nyköping (SE)**

Courier Press, Leamington Spa, England.

Wall for partitioning into sections a channel for electrical cables

## FIELD OF THE INVENTION

The present invention relates to a wall for partitioning a channel for electrical cables into separate parallel elongate sections extending along the length of the channel. the different sections are used for accommodating cables for heavy current, trunk telephone lines, local communication lines and in certain cases for alarm or warning system cables. There may also be data transmission cables in such channels.

## DESCRIPTION OF PRIOR ART

There are already such channels with one or several flat partition walls integrally formed with the inside of the web or back wall of the channel, to project out at right angles to the web. However, these channels have the disadvantage that they are not adaptable to prevailing needs in different projects. Furthermore, different numbers of sections are required for different installations, which can result in uneconomical use of the actual channel, and also uneconomical storekeeping to meet different installation cases.

Instead of the channels with fixed partition walls mentioned above, it is also known from DE-A-1 216 957 to dispose the partition walls so that they can be fitted to elongate attachment means on the inside of the channel web, along the inner edge of the wall there being fastening means for fitting to the attachment means of the web. As a result of the forming of their fastening means in coaction with the attachment means on the web of the channel, these partition walls can only be fitted in a given orientation, and project out at right angles to the web when fitted. Their longitudinal outer edge can be formed with an edge strip which extends upwards a distance sufficient to retain cables laid thereon but leaving an opening to the partition wall above for inserting cables. Apart from the limitation of only being able to be fitted in one direction, there is also a drawback in that they can be difficult to dismantle from the channel. Furthermore, these walls always give the same section space, determined by the disposition of the attachment means along the channel web. The free longitudinal edges of the channel side walls are provided with some form of mutually opposing fixing flanges for fastening the front wall of the channel and fastening possible connection boxes, and if it is desired to have a width adjusted to the box dimensions and also a desired number of sections, for example, this can give a section space which is difficult of access and can also make the fitting of the partition wall difficult.

## SUMMARY OF THE INVENTION

The present invention relates to a partition wall, as already known, which is formed along one longitudinal edge with fastening means for removable attachment to longitudinal attachment means disposed on the inside of the channel web.

The object of the invention is to eliminate the above-mentioned disadvantages with the known partition walls, and what is characterizing for the invention is apparent from the following patent claims.

By means of the invention, the size of the respective channel section can be selected by selectable orientation of the partition wall. Said partition wall further enables easy fitting and dismantling thereof, and dismantling can be done from a suitably selected side of the wall. This is also applicable to the partition walls situated closest to the side walls of the channel, these partition walls being selected suitably turned to give an easily accessible channel section between the side wall and partition wall. More easily accessible channel sections can be obtained on the same channel width, e.g. a width adapted for attaching connection boxes with standard dimensions between the fixing flanges of the side walls, by using a partition wall in accordance with the invention than by fitting previously known partition walls.

A preferred embodiment of the invention will now be described in detail in the following while referring to the attached drawing.

## BRIEF DESCRIPTION OF DRAWING

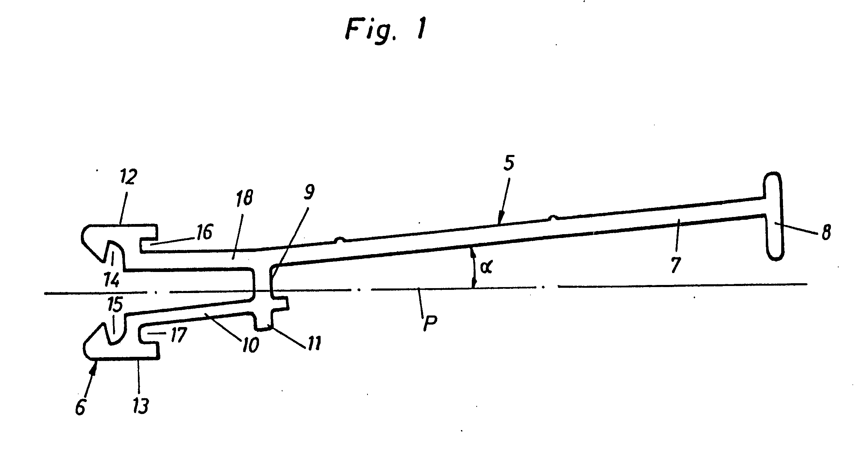

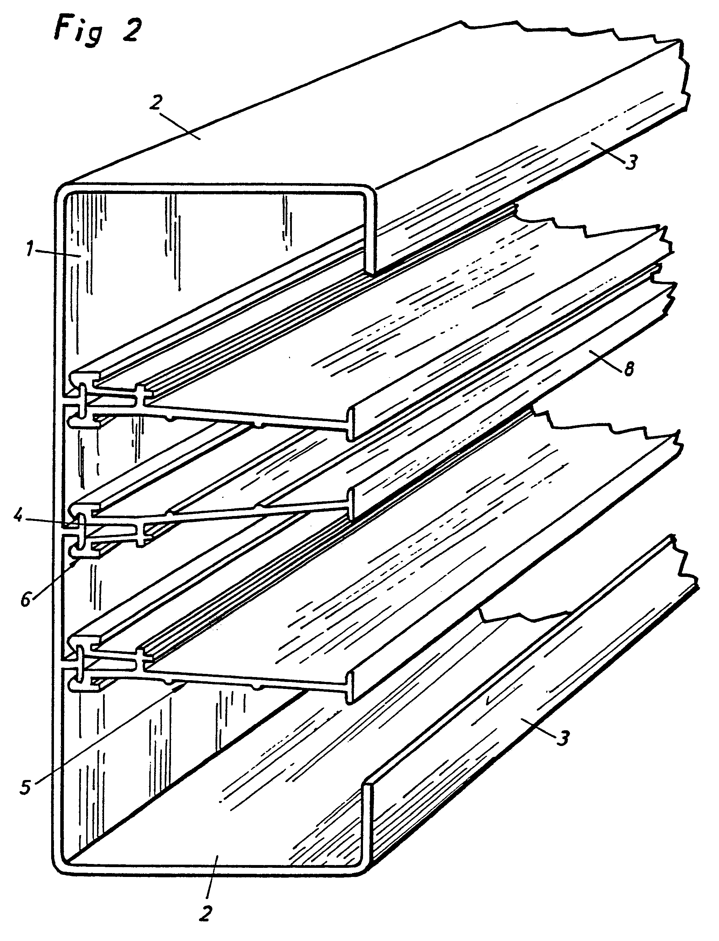

Figure 1 illustrates the preferred partition wall in accordance with the invention in an end view. Figure 2 is a perspective view of a portion of a channel fitted with partition walls formed in accordance with Figure 1.

## PREFERRED EMBODIMENT

Partition walls in accordance with the present invention are intended for fitting in a channel for electrical cables, to partition said channel into separate parallel sections extending along the channel, the different sections being used for cables for heavy current, trunk telephone lines, local internal telephone lines and in certain cases lines for alarm systems. Data transmission cables can also be laid in such a channel.

Somewhat schematically illustrated in Figure 2, there is a cable channel with a web or back wall 1 and two side walls 2. the free edges of the side walls are formed with fixing flanges 3 projecting towards each other, and although this is not shown, these flanges will be formed with some form of longitudinal attachment means for fastening a front wall and connection boxes (not shown) between said flanges. Along the inside of the web 1 in the shown embodiment of the channel there are T-shaped attachment rails 4, adapted for having the partition wall, generally denoted by the numeral 5, fastened thereto. The channel, shown substantially U-shaped in cross section, with side walls 2 projecting at right angles from the web 1, can also have some other cross sectional shape, and can also be put together from two parts, L-shaped in cross section, one part comprising web and side wall and the other part comprising front wall and side wall.

The partition wall 5 in accordance with the invention has, as shown in Figure 1, one longitudinal edge formed with fastening means 6 for simple snap-on attachment onto the T-shaped rail 4, and optionally in a position corresponding to that shown for the middle wall in Figure 2, or in a turned position in relation to this position, as shown for the upper and lower walls in Figure 2. Furthermore, the partition wall is so formed that in both these positions, its support portion 7 (for the cables) forms an angle with a plane along the T-rail at right-angles to the web 2. In figure 1, this plane is denoted by the letter P, and the angle which the support portion 7, in this position upwardly directed, forms with the plane is denoted by $\alpha$. In the oppositely turned position for the partition wall, the support portion 7 is downwardly directed relative to the plane. The opposing longitudinal edge of the partition wall is formed with an edge strip 8 projecting both downwards and upwards relative to said wall to prevent laid cables from falling out, irrespective of which of said positions the wall assumes.

In the illustrated embodiment of the partition wall, the fastening means 6 comprises an inward slot surrounded by an edge wall 18 constituting an extended portion of the support portion 7 of said wall, the edge wall 18 forming an angle with the support portion of substantially 180° less the angle $\alpha$, a back wall or web 9 projecting substantially at right angles from the support portion 7 at its juncture with the edge wall 18, and an edge wall 10 projecting from the wall 9 a distance from its free end to leave an edge portion 11 on the wall 9, the edge wall 10 being oriented substantially parallel to the support portion 7. The free ends of the edge walls 18 and 10, which form an edge plane, have extended portions 12 and 13, respectively, formed with opposing grooves 14 and 15 adapted for snapping onto the T rail 4 of the channel. These extended portions are also formed with exterior grooves 16 and 17, which are open in a direction towards the opposite edge 8 of the partition wall.

By forming the fastening means 6 in this mode, there has been obtained an advantageous springiness or resilience of the fastening means, which has enabled a simple and simultaneously reliable snap-on attachment of the partition wall in both its said positions. Furthermore, by means of the exterior grooves 16 and 17 simple dismantling of the wall has been enabled by using an ordinary screwdriver, which is inserted in either groove to bend out the extended portion 12 or 13, so that it is slipped off the T rail 4. When the extended portion 13 is slipped off, the wall 9 with its projecting edge portion 11 serves as a fulcrum for the screwdriver. To improve springiness of the fastening means 6, the edge wall 10 is preferably made somewhat thinner than the edge wall 18.

Although the illustrated fastening means 6 has naturally been given an advantageous embodiment, other forms thereof are also possible within the scope of the invention, however. What is essential for the partition wall in accordance with the invention is its form and attachment for obtaining an optionally turned partition wall, which, when fitted, forms an angle to the plane P, said plane being at right angles to the channel web. Thereby the size of the channel sections formed by the partition walls can be adjustably and simply varied and a more simple fitting and dismantling of a greater number of partition walls is achieved than was possible with previously known structures.

## Claims

1. A wall (5) for partitioning a cable channel (2) for electrical cables into separate parallel sections along the channel, one longitudinal edge of said partition wall, formed as an elongate plate, being formed with fastening means (6) for removable attachment to longitudinal attachment means (4) disposed on the inside of the web or back wall (1) of the channel, characterized in that the fastening means (6) of the partition wall (5) and the attachment means (4) on the channel are formed for mutual snap-on attachment in either of the two selectably turned positions of the partition wall, said wall (5) in both positions forming an angle ($\alpha$) to a plane (P) through the attachment means (4) of the channel, said plane being at right angles to the web (1) of the channel, and in that the opposing longitudinal edge of said wall (5) is provided with a projection (8) on each side of said wall.

2. A partition wall as claimed in claim 1, characterized in that the fastening means (6) of said wall (5) comprises a slot in the edge plan thereof for co-operation with the attachment means in said wall.

3. A partition wall as claimed in claim 2, characterized in that the slot is defined by substantially parallel slot walls (18, 10).

4. A partition wall as claimed in claim 2, characterized in that the slot is defined by a portion of the partition wall (5) forming one slot wall (18), a wall forming the bottom of the slot and projecting substantially at right angles from the partition wall, and a wall projecting from the bottom slot wall forming the second slot wall (10).

5. A partition wall as claimed in claim 4, characterized in that the outer edge portion (18) forms said angle ($\alpha$) with the remaining portion (7) of said wall.

6. A partition wall as claimed in any of the preceding claims 3—5, the attachment means (4) of the channel comprising a T-shaped rail, characterized in that on the inside of the slot walls (18, 10) adjacent their outer free ends there are formed mutually opposing grooves (14, 15) for snapping on to the T-shaped rail.

7. A partition wall as claimed in any of claims 2—6, characterized in that each of the slot walls (18, 10) is formed with a portion (12, 13, respectively) projecting outwards in a direction away from the slot, said portions each being formed with an exterior groove (16, 17) which is open in a direction towards the said opposing longitudinal edge of the partition wall provided with the projection (8).

8. A partition wall as claimed in claim 6 and 7, characterized in that the grooves (14, 15) adapted for snapping onto the T-shaped rail (4) are formed in the extended portions (12, 13).

## Revendications

1. Paroi (5) pour la cloisonnement d'un caniveau (2) câblespour câbles électriques, en sections parallèles séparées le long du caniveau, un bord longitudinal de ladite paroi de cloisonnement, formée comme un plaque allongée, étant formé avec des moyens de fixation (6) pour le montage amovible sur des moyens longitudinaux (4) de montage disposés sur le côté intérieur de l'âme ou paroi arrière (1) du caniveau, caractérisée en ce que les moyens de fixation (6) de la paroi (5) de cloisonnement et les moyens de montage (4) du caniveau sont formés pour un montage mutuel par emboîtement élastique dans l'une ou l'autre des deux positions dans lesquelles la paroi de cloisonnement peut être tournée sélectivement, ladite paroi (5) dans les deux positions formant un angle ($\alpha$) avec un plan (P) par l'intermédiaire des moyens (4) de montage du caniveau, ledit plan étant perpendiculaire à l'âme )1) du caniveau, et en ce que le bord longitudinal opposé de ladite paroi (5) présente une saillie (8) sur chaque côté de ladite paroi.

2. Paroi de cloisonnement selon la revendication 1, caractérisée en ce que les moyens (6) de fixation de ladite paroi (5) comprennent une rainure ménagée dans le plan de son bord et destinée à coopérer avec les moyens de montage dans ladite paroi.

3. Paroi de cloisonnement selon la revendication 2, caractérisée en ce que la rainure est définie par deux parois de rainures sensiblement parallèles (18, 10).

4. Paroi de cloisonnement selon la revendication 2, charactérisée en ce que la rainure est définie par une portion de la paroi (5) de cloisonnement formant une paroi (18) de rainure, une paroi formant le fond de la rainure et faisant saillie à peu près perpendiculairement de la paroi de cloisonnement, et une paroi faisant saillie de la paroi de fond de la rainure et formant la seconde paroi de la rainure (10).

5. Paroi de cloisonnement selon la revendication 4, caractérisée en ce que la portion (18) de bord extérieur forme ledit angle ($\alpha$) avec la portion restante (7) de ladite paroi.

6. Paroi de cloisonnement selon l'une quelconque des revendications précédentes 3—5, les moyens (4) de montage du coniveau comprenant un rail de forme en T, caractérisée en ce que, sur le côté intérieur des parois (18, 10) de la rainure, adjacent à leurs extrémités extérieures libres, sont formées des gorges (14, 15) opposées mutuellement pour s'emboîter élastiquement sur le rail de forme en T.

7. Paroi de cloisonnement selon l'une quelconque des revendications 2—6, caractérisée en ce que chacune des parois (18, 10) de rainure est formée avec une portion (12, 13) respectivement faisant saillie vers l'extérieur dans une direction s'éloignant de la rainure, lesdites portions étant formées chacune avec une gorge extérieure (16, 17) qui est ouverte dans une direction dirigée vers ledit bord longitudinal opposé de la paroi de cloisonnement comportant la saillie (8).

8. Paroi de cloisonnement selon les revendications 6 et 7, caractérisée en ce que les gorges (14, 15) destinées à s'emboîter élastiquement sur le rail (4) de forme en T sont formées dans les parties prolongées (12, 13).

## Patentansprüche

1. Eine Wand (5) zum Aufteilen eines Kabelkanals (2) für elektrische Kabel in separate, parallele Sektionen entlang dem Kanal, wobei ein Längsrand der Trennwand, als längliche Platte ausgebildet, mit Befestigungsmitteln (6) zum abnehmbaren Anbringen an Längsanbringmittel (4), die sich an der Innenseite der Bahn oder der Rückwand (1) des Kanals befindet, ausgebildet ist, dadurch gekennzeichnet, daß die Befestigungsmittel (6) der Trennwand (5) und die Anbringmittel (4) am Kanal für ein gegenseitiges Aufschnappanbringen in einer von zwei auswählbar gedrehten Lagen der Trennwand ausgebildet sind, daß die Wand (5) in beiden Lagen mit einer Ebene (P) durch die Anbringmittel (4) des Kanals einen Winkel ($\alpha$) bildet, welche Ebene in rechten Winkeln zur genannten Bahn (1) des Kanals verläuft und daß die entgegengesetzte Längskante der genannten Wand (5) mit einem Vorsprung (8) auf jeder Seite der Wand versehen ist.

2. Trennwand nach Anspruch 1, dadurch gekennzeichnet, daß die Befestigungsmittel (6) der genannten Wand (5) einen Schlitz in der Randebene derselben für das Zusammenwirken mit den Anbringmitteln in der Wand umfaßt.

3. Trennwand nach Anspruch 2, dadurch gekennzeichnet, daß er durch im wesentlichen parallele Schlitzwände (18, 10) gebildet ist.

4. Trennwand nach anspruch 2, dadurch gekennzeichnet, daß der Schlitz durch einen Abschnitt der Trennwand (5), der eine Schlitzwand (18) bildet, eine den Boden des Schlitzes ausbildenden Wand, die im wesentlichen in rechten Winkeln von der Trennwand wegsteht, und einer Wand gebildet wird, die von der Bodenwand wegsteht und die zweite Schlitzwand (10) bildet.

5. Trennwand nach Anspruch 4, dadurch gekennzeichnet, daß der äußere Randabschnitt (18) den genannten Winkel ($\alpha$) mit dem Verbleibenden Abschnitt (7) der Trennwand bildet.

6. Trennwand nach irgendeinem der Vorhergehenden Ansprüche 3 bis 5, wobei die Anbringmittel (4) des Kanals eine T-förmige Schiene umfassen, dadurch gekennzeichnet, daß auf der Außenseite der Schlitzwänder (18, 10) in der Nähe ihrer äußeren freien Enden aufeinander zu gerichtete Nuten (14, 15) für das Aufschnappen auf die T-Förmige Schiene ausgebildet sind.

7. Trennwand nach irgendeinem der Ansprüche 2 bis 6, dadurch gekennzeichnet, daß jeder der Schlitzwände (18, 10) mit einem Abschnitt (12 bzw. 13) ausgebildet ist, der in Richtung weg vom Schlitz nach außen vorsteht, wobei diese Abschnitte jeweils mit einer äußeren Nut (16, 17) ausgebildet sind, die in einer Richtung auf die entgegengesetzt liegende Längskante der Trennwand mit dem Vorsprung (8) offen sind.

8. Trennwand nach Anspruch 6 und 7, dadurch gekennzeichnet, daß die für ein Aufschnappen auf die T-förmige Schiene (4) geeigneten Nuten (14, 15) in den verlängerten Abschnitten (12, 13) ausgebildet sind.

# Fig. 1

Fig 2